(19) Europäisches Patentamt
European Patent Office
Office européen des brevets

(11) Veröffentlichungsnummer: **0 232 541**
**B1**

# (12) EUROPÄISCHE PATENTSCHRIFT

(45) Veröffentlichungstag der Patentschrift: **24.10.90**

(51) Int. Cl.⁵: **C07C 263/18**, C07C 265/00, C08G 18/70, C08G 18/24, C07F 7/22

(21) Anmeldenummer: **86117979.4**

(22) Anmeldetag: **23.12.86**

## (54) Latente Zinn-Katalysatoren enthaltende Polyisocyanat-Zubereitungen, ihre Verwendung zur Herstellung von Polyurethankunststoffen und Umsetzungsprodukte von Sulfonylisocyanaten mit ausgewählten Zinnverbindungen.

(30) Priorität: **04.01.86 DE 3600093**

(43) Veröffentlichungstag der Anmeldung:
**19.08.87 Patentblatt 87/34**

(45) Bekanntmachung des Hinweises auf die Patenterteilung:
**24.10.90 Patentblatt 90/43**

(84) Benannte Vertragsstaaten:
**AT BE CH DE FR GB IT LI NL**

(56) Entgegenhaltungen:
**EP-A- 0 132 675**
**DE-A- 2 030 316**
**GB-A- 957 585**

(73) Patentinhaber: **BAYER AG,**
**D-5090 Leverkusen 1 Bayerwerk(DE)**

(72) Erfinder: **Richter, Roland, Dr., Roggendorfstrasse 53, D-5000 Köln 80(DE)**
Erfinder: **Müller, Hanns Peter, Dr., Im Kerberich 6, D-5068 Odenthal(DE)**
Erfinder: **Weber, Wilhelm, Dr., Rybniker Strasse 12, D-5000 Köln 80(DE)**
Erfinder: **Hombach, Rudolf, Dr., Johann-Janssen-Strasse 24, D-5090 Leverkusen(DE)**
Erfinder: **Riberi, Bernd, Dr., Jakob-Boehme-Strasse 2, D-5000 Köln 80(DE)**
Erfinder: **Busch, Ralf, Dr., Andreas-Gryphius-Strasse 5, D-5000 Köln 80(DE)**
Erfinder: **Metzinger, Hans-Gerd, Dr., Morsbroicher Strasse 67, D-5090 Leverkusen(DE)**

EP 0 232 541 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Polyisocyanat-Zubereitungen, welche bestimmte, nachstehend näher beschriebene, latente Zinn-Katalysatoren für die Isocyanat-Additionsreaktion enthalten, die erst unter dem Einfluss von Verbindungen mit gegenüber Isocyanatgruppen reaktionsfähigen Gruppen ihre katalytische Wirksamkeit entfalten, ihre Verwendung als Reaktionspartner für Verbindungen mit gegenüber Isocyanatgruppen reaktionsfähigen Gruppen bei der Herstellung vcn Polyurethankunststoffen, sowie zur Herstellung der Zubereitungen geeignete latente Zinn-Katalysatoren.

In der technischen Polyurethanchemie, z.B. bei der Herstellung vcn Polyurethanschaumstoffen, -elastomeren, -lacken oder -klebstoffen spielt die Katalyse der Isocyanat-Additionsreaktionen eine wichtige Rolle.

Neben den tertiären Aminen werden insbesondere organische Zinnverbindungen als Katalysatoren verwendet. Diese katalysieren sowohl die Urethanisierung (Umsetzung von Isocyanatgruppen mit alkoholischen Hydroxylgruppen), als auch die Harnstoffbildung (Umsetzung von Isocyanatgruppen, Wasser), als auch die Trimerisierung von Isocyanatgruppen mit als auch die Allophanatisierung (Anlagerung von Isocyanatgruppen an Urethangruppen), als auch die Biuretisierung (Anlagerung von Isocyanatgruppen an Harnstoffgruppen).

Aus diesem Grunde stellen organische Zinnverbindungen besonders wertvolle, sowohl in Ein- als auch in Zweikomponenten-Polyurethan-Systemen eingesetzte Katalysatoren dar. Eine Übersicht über die gebräuchlichen Katalysatoren und deren Wirkungsmechanismus findet sich bei A. Farkas und G.A. Mills, Advan. Catalysis, 13, 393 (1962), J.H. Saunders und K.C. Frisch, Polyurethanes, Part I, Wiley-Interscience, New York, 1962, Chap. VI und K.C. Frisch und L.P. Rumao, J. Macromol. Sci.-Revs. Macromol. Chem., C5(1), 103-150 (1970).

Die katalytisch wirksamen Zinnverbindungen, insbesondere Zinncarboxylate und Zinnalkoxide sind jedoch mit zwei wesentlichen Nachteilen behaftet:

Einerseits handelt es sich um hydrolyseempfindliche Verbindungen, weswegen sie den üblichen Polyolformulierungen, die im allgemeinen stets Feuchtigkeitsspuren aufweisen, oft nicht ohne weiteres einverleibt werden können, da sie bei der Lagerung der Polyolformulierungen allmählich ihre katalytische Wirksamkeit einbüßen würden.

Andererseits können die üblichen Zinnkatalysatoren auch organischen Polyisocyanaten, d.h. der Polyisocyanatkomponente von Zweikomponenten-Systemen bzw. NCO-Prepolymeren, wie sie als Bindemittel in Einkomponenten-Systemen (beispielsweise feuchtigkeitstrocknenden Beschichtungsmitteln) verwendet werden, erst kurz vor der Verarbeitung der Systeme einverleibt werden, da ihre Anwesenheit aufgrund der obengenannten, durch die Zinnverbindungen katalysierten Nebenreaktionen die Lagerstabilität der Polyisocyanate stark beeinträchtigen würde.

Es war daher die der Erfindung zugrundeliegende Aufgabe, organische Zinnverbindungen, die die Additionsreaktion von Isocyanatgruppen beschleunigen, so zu derivatisieren, daß sie in einer inaktiven Form vorliegen, in der sie in Polyisocyanaten, insbesondere Isocyanat-Prepolymeren, gelöst werden können, ohne deren Lagerstabilität zu beeinflussen, und aus der sie aber beim Verarbeitungsschritt spontan wieder freigesetzt werden.

Diese Aufgabe konnte durch die Bereitstellung der nachstehend näher beschriebenen erfindungsgemäßen Polyisocyanat-Zubereitungen bzw. des Verfahrens zu ihrer Herstellung gelöst werden.

Gegenstand der Erfindung sind Polyisocyanat-Zubereitungen bestehend aus

a) mindestens einem organischen Polyisocyanat,

b) mindestens einem in der Polyisocyanat-Zubereitung gelöst vorliegendem Umsetzungsprodukt eines Sulfonylisocyanats und eines organischen Zinnkatalysators, sowie gegebenenfalls

c) aus der Polyurethanchemie an sich bekannten Hilfs- und Zusatzmitteln, dadurch gekennzeichnet, daß es sich bei der Komponente b) um Umsetzungsprodukte von Sulfonylisocyanaten mit, mindestens eine Zinnalkoxy-, Zinnsiloxy-, Distannoxan- und/oder Zinncarboxylat-Gruppierung aufweisenden organischen Verbindungen handelt, wobei

(i) das Mengenverhältnis der Reaktionspartner so gewählt wird, daß auf jede Zinn-Sauerstoff-Bindung mindestens eine Isocyanatosulfonylgruppe des Sulfonylisocyanats entfällt;

(ii) die Umsetzung entweder in Abwesenheit der Polyisocyanat-Komponente a) unter anschließender Vermischung ces Umsetzungsprodukts mit der Polyisocyanatkompcnente a) oder in der Pclylsocyanatkomponente a) bzw. einer Teilmenge der Polyisocyanatkomponente a) unter anschließender Durchmischung mit der Restmenge erfolgt, wobei in beiden Fällen gegebenenfalls ein Hilfslösungsmittel mitverwendet wird;

(iii) die Umsetzung von Zinnalkoxy- und/oder Zinnsiloxy-Gruppierungen aufweisenden Verbindungen bei Temperaturen unterhalb 100°C,

(iv) die Umsetzung von Distannoxen-Gruppierungen aufweisenden Verbindungen unter Abspaltung von Kohlendioxid bei 20 bis 120°C und

(v) die Umsetzung von Zinncarboxylat-Gruppierungen aufweisenden Verbindungen unter Abspaltung von Kohlendioxid bei oberhalb 80° bis 160°C erfolgt.

Gegenstand der Erfindung ist auch die Verwendung der erfindungsgemäßen Polyisocyanat-Zubereitungen als Reaktionspartner für Verbindungen mit gegenüber Isocyanatgruppen reaktionsfähigen Wasserstoffatomen bei der Herstellung von Polyurethankunststoffen.

Gegenstand der Erfindung sind schließlich auch Polyurethankatalysatoren, dadurch gekennzeichnet, daß sie (i) das oberhalb 80° bis 160°C unter Abspaltung von Kohlendioxid erhaltenen Umsetzungsprodukt eines Sulfonylisocyanats mit einer, mindestens eine Zinncarboxylat-Gruppierung aufweisenden organischen Verbindung und/oder (ii) das unterhalb 100°C erhaltene Anlagerungsprodukt eines Sulfonylisocyanats an eine, mindestens eine Zinnsiloxy-Gruppierung aufweisende organische Verbindung darstellen, wobei bei der Herstellung des Umsetzungs- bzw. Anlagerungsprodukts jeweils das Mengenverhältnis der Reaktionspartner so gewählt wurde, daß auf jede Zinn- Sauerstoff-Bindung mindestens eine Isocyanatosulfonylgruppe des Sulfonyisocyanats entfällt.

Die deutsche Offenlegungsschrift 3 326 566 beschreibt zwar bereits ähnliche Polyisocyanat-Zubereitungen die mit Sulfonylisocyanat desaktivierte Zinnsalze enthalten, jedoch weisen die in dieser Vorveröffentlichung beschriebenen, durch Umsetzung von Sulfonylisocyanaten mit Zinncarboxylaten bei 0 bis 80°C ohne Abspaltung von Kohlendioxid erhalten Anlagerungsprodukte eine im Vergleich zu den erfindungsgemäßen, reversibel desaktivierten Zinnkatalysatoren geringere katalytischer Aktivität auf, da bei der Reaktivierung der desaktivierten Zinnkatalysatoren gemäß Vorveröffentlichung die als Ausgangsmaterial eingesetzten Zinncarboxylate zurückgebildet werden, während bei der Reaktivierung der erfindungsgemäß reversibel desaktivierten Katalysatoren durch Alkoholyse oder Hydrolyse, vermutlich Zinnalkoxid- bzw. Zinnhydroxid-Strukturen aufweisende Katalysatoren entstehen, die eine weit höhere katalytische Aktivität aufweisen als die bekannten Zinncarboxylate. Ein weiterer Vorteil dieser durch Reaktivierung der desaktivierten Katalysatoren erhaltenen Verbindungen besteht einerseits darin, daß sie ihre hohe katalytische Aktivität zum "richtigen" Zeitpunkt entfalten, d.h. im Falle der Verwendung in Zweikomponenten-Systemen beim Zusammenbringen der erfindungsgemäßen Polyisocyanat-Zubereitungen mit der Polyolkomponente und im Falle der Einkomponenten-Systeme bei der Einwirkung der zur Härtung von beispielsweise Beschichtungen erforderlichen Luftfeuchtiqkeit, und andererseits darin, daß sie noch weit instabiler als die bekannten Zinncarboxylate sind, so daß sie nach Beendigung der Isocyanat-Polyadditionsreaktion alsbald ihre katalytische Aktivität verlieren und daher die Hydrolysestabilität der Polyurethane nicht mehr negativ beeinträchtigen können.

Die Komponente a) der erfindungsgemäßen Zubereitungen besteht aus mindestens einem organischen Polyisocyanat, d.h. aus beliebigen Verbindungen bzw. Gemischen von Verbindungen, die pro Molekül mindestens zwei organisch gebundene Isocyanatgruppen aufweisen. Hierzu gehören sowohl niedermolekulare Polyisocyanate mit einem unter 400 liegenden Molekulargewicht als auch Modifizierungsprodukte derartiger niedermolekularer Polyisocyanate mit einem aus der Funktionalität und dem Gehalt an funktionellen Gruppen berechenbaren, zwischen 400 und 10.000 vorzugsweise 600 bis 8.000 und insbesondere 800 bis 5.000 liegenden Molekulargewicht. Geeignete niedermolekulare Polyisocyanate sind beispielsweise solche der Formel

$Q\,(NCO)_n$,

in der

n = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugweise 8-13 C-Atomen,
bedeuten.

Geeignete derartige niedermolekulare Polyisocyanate sind z.B. Hexamethylendiisocyanat, 1,12-Dodecandiisocyanat, Cyclobutan-1,3-diisocyanat, Cyclophexan-1,3- und -1,4-diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat oder Polyphenyl-polymethylen-polyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Urethan-, Allophanat-, Biuret- oder Uretdion-Struktureinheiten, wie sie nach an sich bekannten Verfahren des Standes der Technik aus den beispielhaft genannten einfachen Polyisocyanaten der obengenannten allgemeinen Formel hergestellt werden können. Unter den höhermolekularen, modifizierten Polyisocyanaten sind insbesondere die aus der Polyurethanchemie bekannten Urethangruppen aufweisenden Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole wie z.B. Ethylenglykol, Trimethylolpropan, Propandiol-1,2, Di- und/oder Tripropylenglykol oder Butandiol-1,2, insbesondere jedoch höhermolekulare Polyetherpolyole und/oder Polyesterpolyole der aus der Polyurethanchemie an sich bekannten Art mit molekulargewichten von 600 bis 8.000, vorzugsweuse 800 bis 4.000, die mindestens zwei, in der Regel 2 bis 8, vorzugsweise aber 2 bis 4 primäre und/oder sekundäre Hydroxylgruppen aufweisen.

Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind bei spielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von > 1 zur Umsetzung gebracht. Die NCO-Prepolymeren weisen im allgemeinen einen NCO-Gehalt von 2,5 bis 25, vorzugsweise 6 bis 20 Gew.-% auf. Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nichtumgesetzten Ausgangspolyisocyanaten, die oft auch als "Semiprepolymere" bezeichnet werden, zu verstehen sind.

Für das erfindungsgemäße Verfahren besonders bevorzugte Polyisocyanatkomponenten a) sind die in der Polyurethanchemie üblichen technischen Polyisocyanate, d.h. Hexamethylendiisocyanat, 1-Isocyanato-3,3,5-trimethy-5-isocyanatomethyl-cyclohexan (Isophorondiisocyanat, abgekürzt: IPDI), 4,4'-Diisocyanato-dicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'- Isomeren, Polyisocyanatgemische der Diphenylmethanreihe wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Bei der Komponente b) der erfindungsgemäßen Polyisocyanat-Zubereitungen handelt es sich um Umsetzungsprodukte von Sulfonylisocyanaten mit mindestens eine Zinnalkoxy-, Zinnsiloxy-, Distannoxan- und/oder Zinncarboxylat-Gruppierung aufweisenden organischen Verbindungen.

Erfindungsgemäß geeignete Sulfonylisocyanate sind beliebige anorganische oder organische Verbindungen, die mindestens eine Struktureinheit der Formel

$-SO_2-NCO$

aufweisen. Vorzugsweise werden organische Sulfonalisocyanate, besonders bevorzugt solche mit aromatisch gebundenen Isocyanatosulfonylresten eingesetzt. Verfahren zur Herstellung von organischen Sulfonylisocyanaten der erfindungsgemäß geeigneten Art, sowie ihr chemisches Verhalten werden zusammenfassend dargestellt von H. Ulrich in Chem. Rev. 65, Seite 369-376, 1965. Des weiteren ist die Herstellung von Arylsulfonylisocyanaten beschrieben in den US-PS 2 666 787 und 3 484 466. Erfindungsgemäß können sowohl aliphatische, cycloaliphatische als auch aromatische Mono- oder Polysulfonylisocyanate eingesetzt werden. Als Beispiele seien genannt: Methylsulfonylisocyanat, Butylsulfonylisocyanat, Cyclohexylsulfonylisocyanat, Perfluoroctylsulfonylisocyanat, Phenylsulfonylisocyanat, p-Toluolsulfonylisocyanat, Benzylsulfonylisocyanat, p-Chlorphenylsulfonylisocyanat, m-Nitrophenylsulfonylisocyanat, 2,5-Dimethylphenylsulfonylisocyanat, p-Fluorphenylsulfonylisocyanat, 2,5-Dichlorphenylsulfonylisocyanat, 3,4-Dichlorphenylsulfonylisocyanat, p-Bromphenylsulfonylisocyanat, p-Methoxyphenylsulfonylisocyanat, p-Nitrophenylsulfonylisocyanat und o-Nitrophenylsulfonylisocyanat; m-Phenylendisulfonyldiisocyanat, p-Phenylendisulfonyldiisocyanat, 4-Methyl-m-phenylendisulfonyldiisocyanat, 2-Chlor-p-phenylendisulfonyldiisocyanat, 5-Chlor-m-phenylendisulfonyldiisocyanat, 1,5-Naphthylendisulfonyldiisocyanat, 3-Nitro-p-phenylendisulfonyldiisocyanat, 4-Methoxy-m-phenylendisulfonyldiisocyanat, 2,5-Furandiylbis(methylensulfonyl)-diisocyanat, 4,4'-Biphenylendisulfonyldiisocyanat, 2,2'-Dichlor-4,4'-biphenylylendisulfonyldiisocyanat, 4,3'-Dimethoxy-4,4'-biphenylylendisulfonyldissocyanat, (Methylendi-p-phenylen)disulfonyldiisocyanat, (Methylendi-3,3'-dimethoxy-p-phenylylen)disulfonyldiisocyanat, (Methylendi-3,3'-dimethyl-p-phenylylen)disulfonyldiisocyanat und 2-Methyl-p-phenylendisulfonyldiisocyanat; des weiteren Sulfonylisocyanate mit weitere NCO-Gruppen wie m-Isocyanatophenylsulfonylisocyanat, p-Isocyanatophenylsulfonylisocyanat, 3-Isocyanato-p-tolylsulfonylisocyanat, 5-Isocyanato-o-tolylsulfonylisocyanat, 3-Isocyanato-4-methoxyphenylsulfonylisocyanat, 4-Isocyanato-3-chlorphenylsulfonylisocyanat, 4'-Isocyanato-4-biphenylylsulfonylisocyanat, 4'-Isocyanato-2,2'-dichloro-4-biphenylylsulfonylisocyanat, 4'-Isocyanato-3,3'-dimethoxy-4-

biphenylylsulfonylisocyanat, α-(p-Isocyanatophenyl)-p-tolylsulfonylisocyanat, α-(4-Isocyanato-3-methoxyphenyl)-2-methoxy-p-tolylsulfonyl-isocyanat, $\alpha^4$-(4-Isocyanato-m-tolyl)-2,4-xylylsulfonylisocyanat und 5-Isocyanato-1-naphthylsulfonylisocyanat; oder mit freien Isothiocyanat-Gruppen wie p-Isothiocyanatophenylsulfonylisocyanat, m-Isothiocyanatophenylsulfonylisocyanat, 3-Isothiocyanato-4-methoxylphenylsulfonylisocyanat und 4-Isothiocyanato-3-methylphenylsulfonylisocyanat.

Bevorzugte Verwendung finden Sulfonylisocyanate, deren $-SO_2$-NCO-Gruppe direkt an einem aromatischen Rest gebunden ist; ganz bevorzugt sind Phenylsulfonylisocyanat, p-Chlorphenylsulfonylisocyanat und p-Toluolsulfonylisocyanat (Tosylisocyanat). Oft empfiehlt sich auch die Verwendung von solchen Sulfonylisocyanaten der beispielhaft genannten Art, welche entweder mindestens zwei Isocyanatosulfonyl-Struktureinheiten oder neben einer Isocyanatosulfonyl-Struktureinheit weitere Isocyanatgruppen aufweisen, da derartige polyfunktionelle Verbindungen bei der erfindungsgemäßen Verwendung der erfindungsgemäßen Polyisocyanat-Zubereitungen beispielsweise in Kombination mit organischen Polyhydroxylverbindungen in das resultierende Polyurethangerüst ohne Kettenabbruch eingebaut werden.

Neben den beispielhaft genannten organischen Sulfonylisocyanaten kommen erfindungsgemäß auch anorganische Sulfonylisocyanate wie z.B. Chlorsulfonylisocyanat oder Sulfonyldiisocyanat, deren Herstellung beispielsweise in DE-PS 928 896 bzw. in DE-PS 1 152 023 beschrieben ist, sowie z.B. Trimethylsilyloxysulfonylisocyanat in Betracht.

Grundsätzlich ist es auch möglich, Gemische verschiedener Sulfonylisocyanate der beispielhaft genannten Art einzusetzen.

Bei den erfindungsgemäß geeigneten organischen Zinnverbindungen handelt es sich um organische Verbindungen, die mindestens eine Zinnalkoxy-, Zinnsiloxy-, Distannoxan- und/oder Zinncarboxylat-Gruppierung aufweisen. Die Zinnverbindungen weisen im allgemeinen ein zwischen 150 bis 1000 liegendes Molekulargewicht auf.

Geeignete Zinnverbindungen sind beispielsweise Zinn(II)- bzw. Zinn(IV)-salze von Carbonsäuren wie Zinn(II)-acetat, Zinn(II)-octoat, Zinn(II)-ethylhexoat, Zinn(II)-oleat, Zinn(II)-laurat, Dibutylzinndiacetat, Dibutylzinndilaurat, Dibutylzinnmaleat, Dioctylzinndiacetat, Dibutylzinndi-2-ethylhexoat, Tributylzinnacetat und Triphenylzinnacetat; Zinn(IV)-alkoxide wie Tributylzinnmethoxid, Tributylzinnethoxid, Dibutylzinndimethoxid, Dibutylzinndiethoxid und Dibutylzinndibutoxid; Distannoxane wie Hexabutyldistannoxan (Bis(tri-n-butylzinn)-oxid, Alkoxy- oder Carboxy-Substituenten aufweisende Distannoxane wie z.B. Tetrabutyl-1,3-diethoxy-distannoxan, Tetrabutyl-1,3-dimethoxydistannoxan und Tetrabutyl-1,3-diacetoxy-distannoxan; sowie Stannosiloxane, wie sie beispielsweise in DE-AS 1 099 743, DE-AS 1 111 378 oder EP-A-084 183 beschrieben sind, wie z.B. Dibutylzinndi(trimethylsilyloxid), Tetrabutyl-1,3-di(trimethylsilyloxy)-distannoxan, Tetra(dibutyl-acetoxyzinnoxy)silan oder Tetrabutyl-3-ethoxy-1-(triethoxysiloxy)-distannoxan.

Bei den gegebenenfalls in den erfindungsgemäßen Polyisocyanat-Zubereitungen vorliegenden Hilfs- und Zusatzmitteln c) handelt es sich um solche der aus der Polyurethanchemie an sich bekannten Art.

So können beispielsweise in den efrindungsgemäßen Polyisocyanat-Zubereitungen die bei der Herstellung von Polyurethanschaumstoffen oft mitverwendeten organischen Triebmittel wie z.B. Methylenchlorid, Chloroform, Ethylidenchlorid, Vinylidenchlorid, Monofluortrichlormethan, Chlordifluormethan, Dichlordifluormethan, Butan, Hexan, Heptan oder Diethylether vorliegen. Des weiteren ist es möglich, den erfindungsgemäßen Zubereitungen gegenüber Isocyanatgruppen inerte Formtrennmittel einzuverleiben, wie sie bei der Herstellung von selbsttrennenden Formkunststoffen auf Polyurethanbasis eingesetzt werden. Bevorzugte Zusatzmittel c) sind jedoch insbesondere die aus der Klebstoff- und Lacktechnologie bekannten Zusatzmittel wie Lösungsmittel wie z.B. Toluol, Xylol, Ethylacetat, Butylacetat, Methyl-ethyl-keton, Methyl-isobutylketon, Ethylenglykolmonoethylether-acetat, Ethylenglykol-monoethylether-acetat oder beliebige Gemische derartiger Lösungsmittel. Die Mitverwendung dieser Lösungsmittel erfolgt insbesondere bei der Verwendung der erfindungsgemäßen Polyisocyanat-Zube reitungen auf Basis von NCO-Prepolymeren als unter dem Einfluß von Luftfeuchtigkeit selbst härtenden Einkomponenten-Klebstoffen bzw. -Lacken. Des weiteren ist es möglich, den erfindungsgemäßen Polyisocyanat-Zubereitungen beispielsweise weitere aus der Lacktechnologie bekannte Hilfs- und Zusatzmittel einzuverleiben, wie z.B. Pigmente, Füllstoffe, Verlaufhilfsmittel und dergleichen.

Die Durchführung des erfindungsgemäßen Verfahrens zur Herstellung der erfindungsgemäßen Polyisocyanat-Zubereitungen kann nach mehreren nachstehend noch näher erläuterten Varianten erfolgen. In allen diesen Varianten erfolge jedoch die Umsetzung des Sulfonylisocyanats mit den Zinnverbindungen unter Verwendung solcher Mengenverhältnisse der Reaktionspartner, daß auf jede Zinn-Sauerstoff-Bindung mindestens eine Isocyanatosulfonyl-Gruppe des Sulfonylisocyanats einfällt, wobei beispielsweise beim Vorliegen von Struktureinheiten der Formel -Sn-O-Sn- (zwei Zinn-Sauerstoff-Bindungen) mindestens zwei Äquivalente an Isocyanatosulfonyl-Gruppen zum Einsatz gelangen müssen. Die Verwendung eines Unterschusses an Sulfonylisocyanat ist, wie leicht einzusehen, wenig zweckmäßig, da hierdurch nur eine teilweise Blockierung der Katalysatoren erreicht würde. Die Verwendung eines Überschusses an Sulfonylisocyanat ist im allgemeinen nicht schädlich sondern kann gegebenenfalls zur Verminderung der Feuchtigkeitsempfindlichkeit (Abfangen von Feuchtigkeitsspuren durch den Sulfonylisocyanat-Überschuß) der Umsetzungsprodukte beitragen. Im allgemeinen wird daher das Mengenverhältnis der Reaktionspartner so gewählt, daß auf jede Zinn-Sauerstoff-Bindung der organischen

verbindungen 1 bis 3, vor zugsweise 1 bis 2 Isocyanatosulfonyl-Gruppen des Sulfonylisocyanats entfallen.

Der erfindungsgemäßen Umsetzung liegt ein allgemeines Prinzip zugrunde, demzufolge die Isocyanatosulfonyl-Gruppe in jede vorhandene Zinn-Sauerstoff-Bindung insertiert:

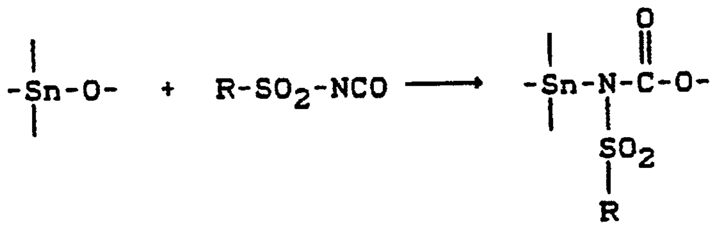

wobei in Abhängigkeit von der Struktur der Zinnverbindungen Decarboxylierungsreaktionen eintreten können.

Im einzelnen wird das erfindungsgemäße Verfahren entsprechend der verwendeten Zinnsalze wie folgt durchgeführt, wobei die nachfolgend angegebenen Strukturen der erfindungswesentlichen Anlagerungsverbindungen nicht immer exakt aufgeklärt wurden, sondern zum Teil direkt aus der Literatur übernommen wurden bzw. von analogen Umsetzungen abgeleitet sind.

Vergleiche hierzu nachfolgende Literatur:

- A.J. Bloodworth u. A.G. Davies, J. Chem. Soc. (1965), 5238;
- A.J. Bloodworth u. A.G. Davies, J. Chem. Soc. (1965), 6245;
- A.J. Bloodworth u. A.G. Davies, J. Chem. Soc. (1965), 6858;
- W.P. Neumann u.a., Angew. Chem. 76, 856 (1964);
- Y, I, Dergunov, N.I. Mysin und G.P. Balabanov, Zh.Obshch Khim. 42 (104) 9, 2034 (1972);
- N.I. Mysin und Y.I. Dergunov, Zh. Obshch. Khim. 46 (108) 1, 153 (1976);
- G.P, Balabonov, Y.I. Dergunov, Y.I. Mushkin u. N.I. Mysin, Zh. Obshch. Khim. 42 (104) 3, 627 (1972);
- N.I. Mysin u. Y.I. Dergunov, Zh. Obshch, Khim 44, 1520 (1974) und
- Y.I. Dergunov, N.Y. Mysin und Y.I. Mushkin, Zh. Obshch. Khim. 44, 813 (1974).

a) Herstellung der latenten Zinnkatalysatoren in Substanz

Unter Inertbedingungen und in einem geeigneten Rührgefäß wird die entsprechende Zinnverbindung vorgelegt und bei angegebener Temperatur mit dem Sulfonylisocyanat versetzt. Danach rührt man weiter bis z.B. die theoretische Menge $CO_2$ entstanden ist (Kontrolle über Rückwaage oder Gasmengenzähler) bzw. eine quantitative Umsetzung erreicht ist.

Verwendet man beispielsweise ein Mol eines Zinn(IV)-carboxylats wie Dibutylzinndilaurat und 2 Mol oder mehr Tosylisocyanat so erhält man bei oberhalb 80°C und bis zu 160°C, vorzugsweise bei bis zu 120°C unter Abspaltung von zwei Mol Kohlendioxid ein stannyliertes N-Acyltosylamid.

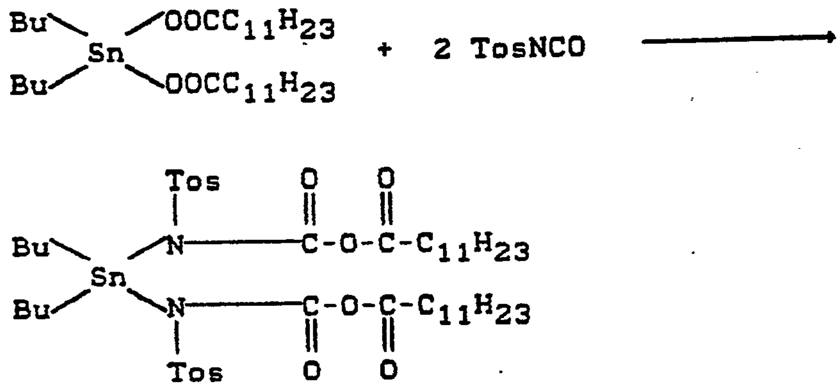


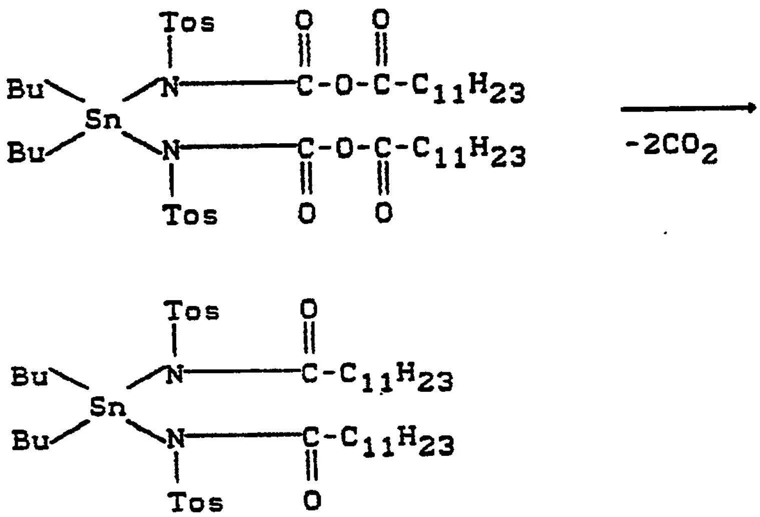


Verwendet man beispielsweise ein Mol eines Zinn(IV)-monoalkoxids wie Tributylzinnmethoxid und 1 Mol oder mehr Tosylisocyanat, so erhält man bereits bei Raumtemperatur bzw. bei einer beliebigen, unterhalb 100°C, vorzugsweise bei 20 bis 60°C liegenden Temperatur, spontan unter leichter Wärmeentwicklung ein stannyliertes Tosylurethan (ohne Abspaltung von Kohlendioxid).

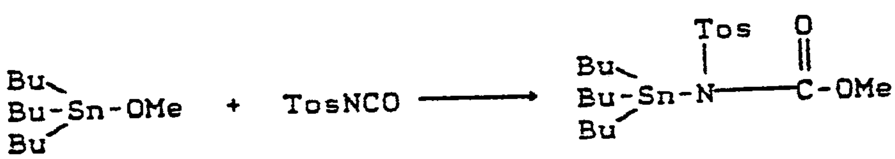


Verwendet man beispielsweise ein Mol eines Distannoxans wie Hexabutyldistannoxan und zwei Mol oder mehr Tosylisocyanat, so bildet sich bei 20° bis 120°C, vorzugsweise bei 60° bis 100°C, unter Abspaltung von einem Mol Kohlendioxid ein bis-stannylierter Tosylharnstoff:

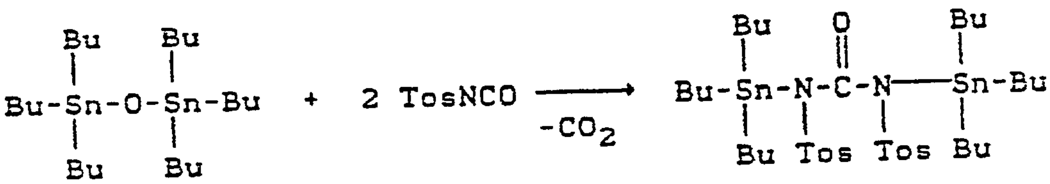


Verwendet man beispielsweise ein Mol eines substituierten Distannoxans, welches z.B. zusätzlich

noch Zinnacetoxy-Gruppierungen enthält, wie 1,3-Diacetoxytetrabutyldistannoxan und vier Mol oder mehr Tosylisocyanat, so erhält man oberhalb 80° bis 120°C unter Abspaltung von 3 Mol Kohlendioxid ein Produkt, bei dem über Dibutylstannyleinheiten ein Tosylharnstoff mit zwei N-Acyltosylamiden verknüpft ist:

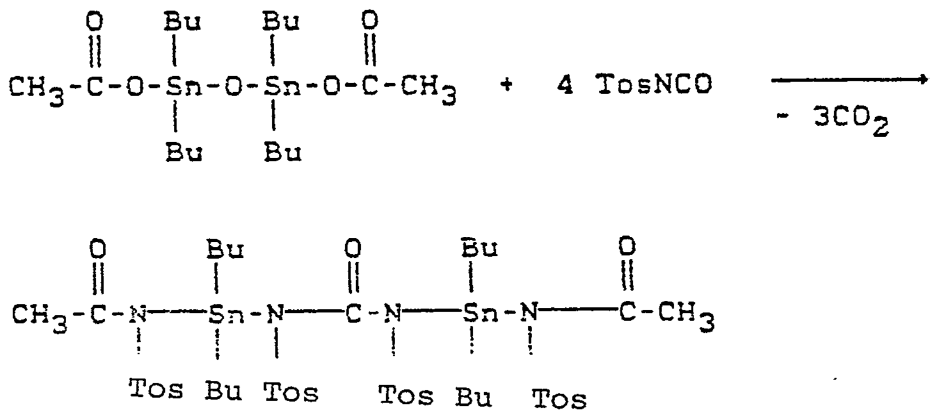


Verwendet man beispielsweise ein Mol eines Stannosiloxans wie Dibutylzinndi(trimethylsilyloxid) und zwei oder mehr Mol Tosylisocyanat so erhält man bereits bei Raumtemperatur bzw. bei einer beliebigen Temperatur unterhalb 100°C, vorzugsweise bis 60°C, spontan unter leichter Wärmeentwicklung ein N,N'-Stannyl-bistosylurethan:

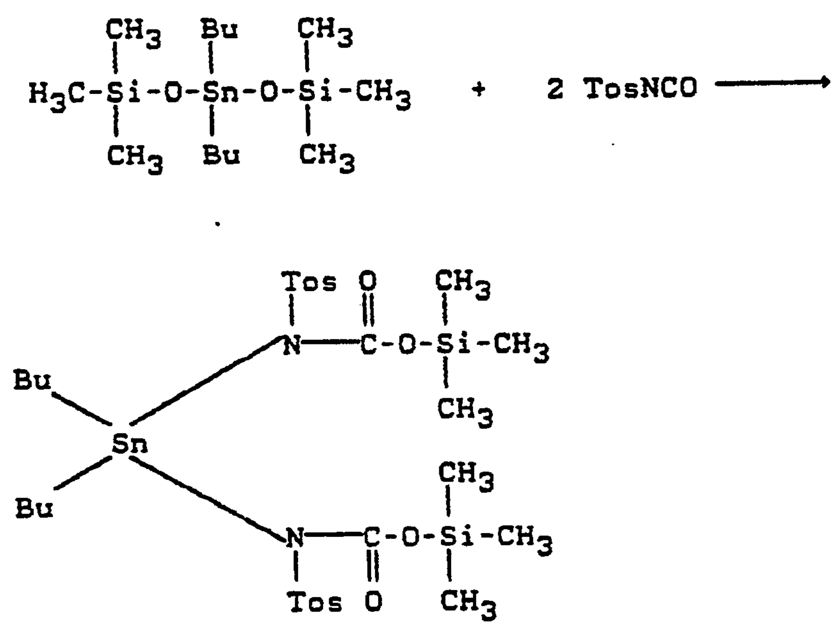


Auch die Stannosiloxane können weitere funktionelle reaktionsfähige Gruppen beinhalten wie z.B. Tetrabutyl-3-ethoxy-1-(triethoxysiloxy)-distannoxan, welches mit 4 oder mehr Mol Tosylisocyanat innerhalb des Temperaturebereichs von 20° bis 100°C, vorzugsweise bei 60° bis 100°C, unter Abspaltung von einem Mol Kohlendioxid ein Produkt ergibt, bei dem über Dibutylstannyleinheiten ein Tosylharnstoff mit zwei unterschiedlich substituierten Tosylurethanen verknüpft ist:

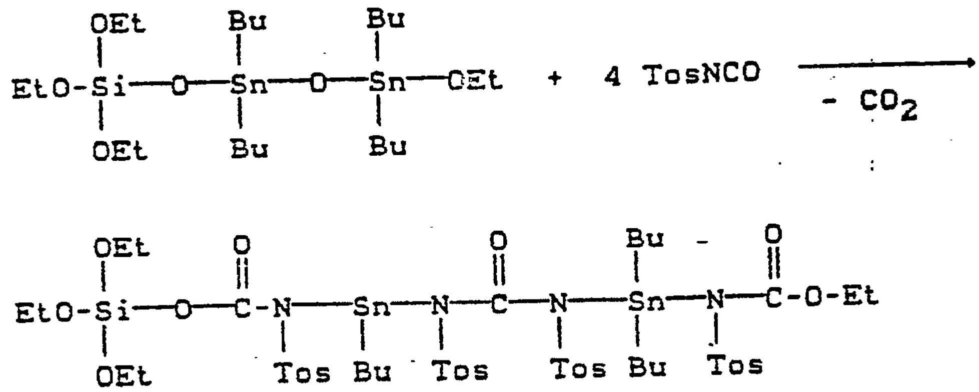

Diesen Ausführungen entsprechend erfolgt die Umsetzung des Sulfonylisocyanats mit Zinnalkoxy- oder Zinnsiloxy-Gruppierungen aufweisenden Verbindungen bei Temperaturen unterhalb 100°C, vorzugsweise bei 20° bis 60°C, mit Distannoxan-Gruppierungen aufweisenden Verbindungen bei 20° bis 120°C, vorzugsweise 60° bis 100°C und mit Zinncarboxylat-Gruppierungen aufweisenden Verbindungen bei oberhalb 80° bis 160°C, vorzugsweise bis 120°C. Im Falle des gleichzeitigen Vorliegens unterschiedlicher derartiger Gruppen wird vorzugsweise die Umsetzung bei einer solchen Temperatur durchgeführt, die alle diese Bedingungen erfüllt. So erfolgt vorzugsweise, wie bereits ausgeführt, die Umsetzung des Sulfonylisocyanats mit dem zuletzt beispielhaft genannten Tetrabutyl–3–ethoxy–1–(triethoxysiloxy)–distannoxan bei einer zwischen 60° und 100°C liegenden Temperatur.

b) Formulierung der latenten Zinnkatalysatoren in Isocyanatgruppen-haltigen Polyurethansysthemen

Die erfindungswesentliche Umsetzung kann sowohl in einem geeigneten inerten Lösungsmittel wie beispielsweise den bereits obengenannten inerten Lösungsmitteln oder den bereits obengenannten, als Treibmittel verwendbaren organischen Flüssigkeiten oder auch in Substanz geschehen, worauf sich die Durchmischung der gegebenenfalls gelösten Umsetzungsprodukte mit der Polyisocyanatkomponente a) anschießt, wobei das gegebenenfalls mitverwendete Lösungsmittel vor oder nach der Durchmischung mit dem Polyisocyanat destillativ abgetrennt werden kann. Die Umsetzung kann auch in der Polyisocyanatkomponente a) bzw. in einer Teilmenge der Polyisocyanatkomponente a) durchgeführt werden, wobei im letztgenannten Fall die Restmenge der Polyisocyanatkomponente zugemischt wird. Auch hierbei kann gewünschtenfalls ein Hilfslösungsmittel mitverwendet werden, welches gegebenenfalls im Anschluß an die Durchmischung der Einzelkomponenten destillativ entfernt wird. Es ist auch möglich, die Umsetzung in einem bestimmten organischen Polyisocyanat (Teilmenge der Komponente a)) durchzuführen und anschließend ein anderes organisches Polyisocyanat der oben beispielhaft genannten Art dem so erhaltenen Gemisch einzuverleiben, wobei letztendlich die Gesamtmenge der Polyisocyanatkomponente a) sich aus zwei unterschiedlichen Polyisocyanaten zusammensetzt.

Bei der Herstellung der erfindungsgemäßen Polyisocyanat-Zubereitungen durch einfaches Abmischen ist lediglich auf Ausschluß von Luftfeuchtigkeit zu achten. Die Durchmischung selbst gelingt glatt, da die erfindungsgemäßen latenten Zinnkatalysatoren gut in organischen Polyisocyanaten und Lösungsmitteln löslich sind; eine Temperaturerhöhung ist nicht notwendig, jedoch auch nicht ausgeschlossen, falls dies zur Erlangung einer niedrigen Viskosität erwünscht ist.

Bei allen Varianten des erfindungsgemäßen Verfahrens kommen die Polyisocyanat-Komponente a) und die Einzelkomponenten der Komponente b) vorzugsweise in solchen Mengen zum Einsatz, daß in den erfindungsgemäßen Polyisocyanat-Zubereitungen, bezogen auf die Polyisocyanat-Komponente a) 0,005 bis 10 Gew.-%, vorzugsweise 0,01 bis 5 Gew.-% an Zinn vorliegen.

Die gegebenenfalls in den erfindungsgemäßen Polyisocyanat-Zubereitungen vorliegende Hilfs- und Zusatzmittel werden den Zubereitungen im allgemeinen im Anschluß an die beschriebene Herstellung der Lösungen der Komponente b) in der Komponente a) hinzugefügt. Grundsätzlich ist es jedoch auch möglich, die gegebenenfalls mitzuverwendenden Hilfs-und Zusatzmittel der Komponente a) vor der Durchführung der erfindungsgemäßen Umsetzung bzw. vor der Abmischung der Komponenten a) und b) einzuverleiben.

Die erfindungswesentlichen Anlagerungsverbindungen sind extrem hydrolyse- bzw. alkoholyseempfindlich und werden durch Zutritt von Wasser (Substrat- oder Luftfeuchtigkeit) und/oder Verbindungen mit gegenüber Isocyanatgruppen reaktionsfähigen Gruppen, insbesondere Hydroxylgruppen unter Freisetzung der Katalysatoren zerlegt. Vor dieser hydrolytischen bzw. alkoholytischen Spaltung der erfindungswesentlichen Anlagerungsverbindungen sind diese gegenüber Isocyanatgruppen völlig inert und bewirken auch keinerlei, die Lagerstabilität von organischen Polyisocyanaten beinträchtigende Nebenreaktionen. Die erfindungsgemäßen Polyisocyanat-Zubereitungen stellen daher äußerst interessante, blockierte Katalysatoren enthaltende Ausgangsmaterialien für die Herstellung von Polyurethankunststoffen dar und können zur Herstellung beliebiger Polyurethankunststoffe, z.B. zur Herstellung von Schaumstoffen, Elastomeren, Beschichtungen oder Verklebungen Verwendung finden. Die erfindungsgemäßen Polyisocyanat-Zubereitungen können hierzu sowohl nach dem Einkomponenten- als auch nach dem Zweikomponenten-Prinzip mit Verbindungen mit gegenüber Isocyanatgruppen reaktionsfähigen Gruppen ausgehärtet werden, wobei im erstgenannten Fall im allgemeinen Wasser (Substrat- oder Luftfeuchtigkeit), die "Verbindungen mit gegenüber Isocyanatgruppen reaktionsfähigen Gruppen" darstellt. Bei der erfindungsgemäßen Verwendung der erfindungsgemäßen Polyisocyanat-Zubereitungen nach dem Zweikomponenten-Prinzip können die aus der Polyurethanchemie an sich bekannten Verbindungen mit gegenüber Isocyanatgruppen rekationsfähigen Gruppen, insbesondere Hydroxylgruppen, wie sie beispielhaft bereits oben im Zusammenhang mit der Herstellung der NCO-Prepolymeren offenbart worden sind, ebenso wie alle üblichen Hilfs- und Zusatzmittel der Polyurethanchemie zur Anwen dung gelangen, wobei anstelle der üblicherweise verwendeten Polyisocyanat-Komponente die erfindungsgemäßen Polyisocyanat-Zubereitungen eingesetzt werden. Von besonderem Interesse sind die erfindungsgemäßen Polyisocyanat-Zubereitungen als bzw. zur Herstellung von, unter dem Einfluß von Luftfeuchtigkeit vernetzbare(n) Einkomponenten-Systeme(n), wie sie als Klebstoffe oder für die Oberflächenbeschichtung eingesetzt werden. Die erfindungsgemäßen Polyisocyanat-Zubereitungen stellen in Abwesenheit von Feuchtigkeit lagerstabile System dar, die bei Zutritt von Luftfeuchtigkeit praktisch ebenso schnell aushärten wie die entsprechenden, nicht-blockierte Katalysatoren enthaltenden Systeme des Standes der Technik.

Bei der Herstellung von Hilfs- und Zusatzmittel, insbesondere von Lösungsmittel und/oder Pigmente bzw. Füllstoffe enthaltenden, erfindungsgemäßen Polyisocyanat-Zubereitungen kann diese Lagerstabilität gewünschtenfalls, wie oben bereits angedeutet, durch Verwendung eines Überschusses an Sulfonylisocyanat ("Wasserfänger") sichergestellt werden (vgl. US-PS 3 330 849 und 3 479 325).

In den nachfolgenden Beispielen beziehen sich alle Angaben in Prozent [%] und Teile auf das Gewicht.

Beispiele

Verwendete Abkürzungen:
DBTL: Dibutylzinndilaurat
DTBD: 1,3-Diacetoxytetrabutyldistannoxan
HBDS: Hexabutyldistannoxan
Roh-MDI: 4,4'-Diisocyanatodiphenylmethan im Gemisch mit seinen Isomeren und höheren Homologen, NCO-Gehalt = 30,4 %;
Viskosität (25°C) = 80 mPas
RT: Umgebungstemperatur (18-25°C)
SO: Zinndioctoat
TBTM: Tributylzinnmethoxid
TDI 80: Mischung aus 80 % 2,4- und 20 % 2,6-Diisocyanato-toluol
TETD: Tetrabutyl-3-ethoxy-1-(triethoxysiloxy)-distannoxan
TosNCO: p-Toluolsulfonylisocyanat
IR-Spektren: s = starke Absorptionsbande
m = mittelstarke Absorptionsbande
w = schwache Absorptionsbande

A. Allgemeine Arbeitsvorschrift zur Herstellung der erfindungswesentlichen Umsetzungsprodukte (Beispiele 1 bis 11)

In einem austarierten Zweihalskolben wird unter trockenem Stickstoff die entsprechende Zinnverbin dung vorgelegt. Dann gibt man im Stickstoff-Gegenstrom oder über einen geschlossenen Tropftrichter die angegebene Menge Tosylisocyanat bei der vorgeschriebenen Temperatur zu.

Man rührt bei der jeweiligen Temperatur nach und überprüft die $CO_2$-Entwicklung über Rückwaage. Das Endprodukt wird unter Stickstoffatmosphäre abgefüllt.

Beispiel 1

Aus 50 g (0,079 mol) DBTL und 62,3 g (0,316 mol) TosNCO (Zugabe bei RT, keine exotherme Reaktion) entstehen nach 4 Stunden Rührzeit bei 100°C 103,7 g einer rötlich-gelben öligen Flüssigkeit ($CO_2$-Menge: 0,195 mol).

2,07 g dieses Produktes entsprechen 1,0 g DBTL (Überstabilisierung 2 Mol TosNCO pro mol DBTL).

Beispiel 2

Aus 50,0 g (0,079 mol) DBTL und 62,4 g (0,317 mol) TosNCO entstehen nach 2 Stunden 15 Minuten Rührzeit bei 120°C 105,3 g eines rötlich-gelben Öls ($CO_2$-Menge: 0,16 mol).

IR-Spektrum: 2240 $cm^{-1}$(s)(Überstabilisierung mit 2 mol TosNCO pro mol DBTL)
1730 $cm^{-1}$ (m)

2,10 g dieses Produktes entsprechen 1,0 g DBTL.

Beispiel 3

Aus 50,0 g (0,079 mol) DBTL und
31,2 g (0,158 mol) TosNCO entstehen nach 2 Stunden 30 Minuten Rührzeit bei 120°C 75,8 g Produkt ($CO_2$-Menge: 0,12 mol).

Bei äquimolarer Umsetzung ist die $CO_2$-Entwicklung nicht quantitativ.

Beispiel 4

Aus 22,1 g (0,069 mol TBTM und
40,8 g (0,207 mol) Tosylisocyanat
(bei Zugabe exothermer Reaktion bis 70°C) entstehen nach 30 Minuten Rührzeit bei 80°C 62,9 g eines gelblichen Harzes ($CO_2$-Menge: keine Decarboxylierung).

2,85 g dieses Produktes entsprechen 1,0 g TBTM (Überstabilisierung mit 2 mol TosNCO pro mol TBTM).

Beispiel 5

Aus 50,0 g (0,084 mol) HBDS und
41,4 g (0,210 mol) Tosylisocyanat
(Zugabe bei 80°C, 3 bis 5 Minuten, starke Gasentwicklung, leicht exotherm) entstehen nach 60 Minuten Rührzeit bei 80°C 87,4 g einr gelblichen Festsubstanz ($CO_2$-Menge: 0,09 mol); IR-Spektrum: 1690 $cm^{-1}$ (s).

1,75 g dieses Producktes entsprechen 1,0 g HBDS (Überstabilisierung 0,5 mol TosNCO pro mol HBDS).

Beispiel 6

Zu 5,0 g (0,007 mol) TETD (IR: kein Absorption zwischen 1650 und 1800 $cm^{-1}$), gelöst in 25 mol abs. Toluol, gibt man bei RT
1,4 g (0,007 mol) TosNCO (IR: 1750 $cm^{-1}$, schwache Bande), rührt 10 Minuten und gibt dann weitere
2,8 g (0,014 mol) TosNCO hinzu (IR: 1730 $cm^{-1}$ (m); 1750 $cm^{-1}$ (w)).

Die Lösung erwärmt sich auf 38°C. Wiederum nach 10 Minuten werden nochmals
1,4 g (0,007 mol) TosNCO (IR: 1730 $cm^{-1}$ (m); 1750 $cm^{-1}$ (s)) hinzugegeben und nach weiteren 10 Minuten
1,4 g (0,007 mol TosNCO (IR: 2240 $cm^{-1}$ (s), 1750 $cm^{-1}$ (s) und 1730 $cm^{-1}$ (m)).

Die Auswertung der IR-Spektren zeigt, daß pro mol TETD 4 mol TosNCO glatt insertiert werden (das fünfte mol TosNCO zeigt freie NCO-Bande), wobei bei RT keine deutliche Gasentwicklung wahrgenommen wird (Wiederholung bei 80°C gibt spontane Gasentwicklung bei Zugabe der ersten 1,4 g TosNCO).

Beispiel 7

Aus 25,0 g (0,035 mol) TETD und
56,0 g (0,284 mol) Tosylisocyanat
(Zugabe bei 80°C, 5 Minuten, leicht exotherme Reaktion) entstehen nach 60 Minuten Rührzeit bei 80°C 79,7 g einer öligen gelben Flüssigkeit ($CO_2$-Menge: 0,03 mol); IR-Spektrum: starke Bande bei 1750 $cm^{-1}$, mit Schulter bei 1730 $cm^{-1}$; 2240 $cm^{-1}$ (s)).

3,2 g Produkt entsprechen 1,0 g TETD (Überstabilisierung mit 4 mol TosNCO pro mol TETD).

Beispiel 8

In ca. 30 ml abs. Butylacetat legt man
10,5 g des rötlichen Öls aus Beispiel 2 vor. Man rührt 15 Minuten bei RT und füllt dann mit abs. Butylacetat auf exakt 50 ml auf.

1 ml dieser Lösung entsprechen 0,1 g DBTL.

Beispiel 9

Aus 50,0 g (0,123 mol) SO und
48,7 g (0,247 mol Tosylisocyanat

(Zugabe bei RT, 30 Minuten, leicht exotherme Reaktion) entstehen nach 2 Stunden Rührzeit bei 80°C und 2 Stunden Rührzeit bei 120°C 89,9 g eines gelben, pastösen Festproduktes ($CO_2$-Menge: 0,2 mol).

1,8 g des Produktes entsprechen 1,0 g SO.

Beispiel 10

Aus 50,0 g (0,083 mol) DTBD und
131,3 g (0,664 mol) Tosylisocyanat in 175,0 g absolutem Toluol
(Zugabe bei 80°C, 2-3 Minuten, starke Gasentwicklung) entstehen nach 8 Stunden Rückfluß (110°C) und Abzug des Toluols 170,3 g einer gelben Festsubstanz ($CO_2$-Menge: 0,25 mol); IR-Spektrum 1725 $cm^{-1}$ (m), 1700 $cm^{-1}$ (w, Schulter).

3,4 g dieses Produktes entsprechen 1,0 g DTBD (Überstabilisierung mit 4 mol TosNCO pro mol DTBD).

B. Erfindungsgemäße Polyisocyanat-Zubereitungen (Beispiele 12, 13, 15, 17, 19, 21, 22 und 23), sowie Vergleichsbeispiele (Beispiele 11, 14, 16, 18 und 20)

In 14 Parallelversuchen wurden durch Durchmischen unter Inertgas von TDI 80 bzw. von Roh-MDI mit den in den nachstehenden Tabellen 1 und 2 angegebenen Zinnverbindungen erfindungsgemäße Polyisocyanat-Zubereitungen bzw. entsprechende Vergleichssubstanzen hergestellt. Die Menge der Zinnverbindungen wurde jeweils so bemessen, daß auf 100 Teile des Polyisocyanats 1 Teil der jeweiligen Zinnverbindung entfällt, wobei das Sulfonylisocyanat nicht mit in die Berechnung einging. In den Beispielen 11 bis 21 wurden die erhaltenen Zubereitungen jeweils zunächst 24 h bei Raumtemperatur gelagert und anschließend bei Raumtemperatur unter Einhaltung eines NCO/OH-Äquivalentverhältnisses von 1:1 mit einem Polyetherpolyol der OH-Zahl 380 (Propoxylierungsprodukt von Trimethylolpropan) vermischt, wonach die Verquallungszeit (Erstarrungspunkt) $t_{VQ}$, Temperaturerhöhung $T_{VQ}$, Maximaltemperatur $T_{MAX}$ und die Zeit bis zum Erreichen der Maximaltemperatur $t_{TM}$ festgehalten wurden. Die Beispiele 22 bis 23 beschreiben analoge Versuche, wobei jedoch die, die erfindungsgemäßen Katalysatoren enthältenden Polyisocyanat-Zubereitungen nach ihrer Herstellung zunächst während 8 Monaten bei Raumtemperatur gelagert wurden.

Die jeweils verbleibenden Restmengen der Polyisocyanat-Zubereitungen gemäß Beispielen 12 bis 22 wurden jeweils bei Raumtemperatur im verschlossenen Gebinde aufbewahrt. Der Zeitraum bis zum Auftreten von sichtbaren Veränderungen (Kristallisation, Trübung oder Niederschlagsbildung) wird als "Standzeit" bezeichnet und ebenfalls in Tabelle 1 aufgeführt. Die Beobachtung der Standzeit wurde nach 6 Monaten abgebrochen.

Tabelle 1 Polyisocyanat-Zubereitung in TDI 80 nach 24 h Lagerzeit

| Patent-Beispiel | Zinnverbindung | Standzeit | $t_{VQ}$ | $T_{VQ}$ | $t_{TM}$ | $T_{MAX}$ |
|---|---|---|---|---|---|---|
| 11 | DBTL | 1 d | 50" | 65° | 115" | 115° |
| 12 | gemäß Bsp. 3 | ~ | 33" | 55° | 120" | 122° |
| 13 | gemäß Bsp. 2 | ~ | 33" | 55° | 105" | 115° |
| 14 | HBDS | 2 d | 405" | 85° | 450" | 116° |
| 15 | gemäß Bsp. 5 | ~ | 180" | 60° | 275" | 109° |
| 16 | DTBD | 1 d | 10" | 35° | 145" | 110° |
| 17 | gemäß Bsp. 10 | ~ | 13" | 40° | 115" | 120° |
| 18 | TETD | 8 d | 50" | 55° | 140" | 114° |
| 19 | gemäß Bsp. 7 | ~ | 25" | 40° | 110" | 120° |
| 20 | SO | 17 d | 10" | 30° | 170" | 97° |
| 21 | gemäß Bsp. 9 | ~ | 7" | 30° | 145" | 155° |

Erläuterungen zu Tabelle 1:
d = Tage
~ = nach 6 Monaten keine Veränderung
" = Sekunde

Tabelle 2 Polyisocyanat-Zubereitungen nach 8 Monaten Lagerzeit

| Patent-Beispiel | Isocyanat | Geblockter Katalysator | Verquallungstests $t_{VQ}$ | $T_{VQ}$ | $t_{TM}$ | $T_{MAX}$ |
|---|---|---|---|---|---|---|
| 22 | TDI 80 | gemäß Bsp.3 | 55" | nb* | 143" | 140° |
| 23 | Roh-MDI | gemäß Bsp.3 | 20" | nb | 190" | 113° |

Erläuterungen zu Tabelle 2:
d = Tage
* = nicht bestimmt

C. Erfindungsgemäße Polyisocyanat-Zubereitungen auf Basis eines NCO-Prepolymeren (Beispiele 25, 26 und 28), sowie entsprechende Vergleichsbeispiele (Beispiele 24 und 27)

Bei dem nachfolgend verwendeten NCO-Prepolymeren handelt es sich um ein Umsetzungsprodukt mit einem NCO-Gehalt von 12,4 % und einer Viskosität (25°C) von 7500 mPa.s von Roh-MDI mit Polypropylenglykol der OH-Zahl 56.

Durch Vermischen von jeweils 100 g des NCO-Prepolymeren mit den in Tabelle 3 genannten Zinnverbindungen werden erfindungsgemäße Polyisocyanat-Zubereitungen bzw. die entsprechenden Vergleichssubstanzen hergestellt. Die jeweils erhaltenen Polyisocyanat-Zubereitungen wiesen die in Tabelle 3 angegebene Standzeit bei RT bzw. bei 50°C auf.

**Tabelle 3** Voraktiviertes aromatisches NCO-Prepolymer

| Beispiel | Zinnverbindung | Konzentration b) [%] | Standzeit [Tage] RT | Standzeit [Tage] 50° C |
|---|---|---|---|---|
| 24 | DBTL | 1 | 38 | 8 |
| 25 | gemäß Bsp. 2 | 1 | 104 | 34 |
| 26 | gemäß Bsp. 2 a) | 1 | >270 | nb |
| 27 | TETD | 0,5 | 5 | - |
| 28 | gemäß Bsp. 8 | 0,5 | >180d | - |

Erläuterungen zu Tabelle 3:

a) statt TosNCO wurde eine äquivalente Menge $(CH_2)_3Si-O-SO_2-NCO$ verwendet
b) bezogen auf Zinnverbindung ohne Sulfonylisocyanat

Zur Prüfung der klebetechnischen Eigenschaften der Polyisocyanat-Zubereitungen gemäß Tabelle 3 wurden Prüfkörper aus glasfaserverstärktem Polyesterharz (30 % Glasgehalt) der Abmessung 2 x 4 x 0,3 cm mit Glaspapier leicht angerauht und ca. 2 Sekunden über kochendes Wasser gehalten. Danach wurden in vier Parallelversuchen die Oberflächen der Prüfkörper mit den Polyisocyanat-Zubereitungen gemäß Beispielen 24, 25, 27 und 28 in einer Schichtdicke von ca. 0,2 - 0,4 mm beschichtet und die Prüfkörper so zusammengelegt, daß eine überlappende Fläche von 2 $cm^2$ vorlag.

Anschließend wird mit einem Druck von 0,3 MP zusammengepreßt. Die Scherfestigkeit wurde nach DIN 53 283 mit einem Spindelvorschub von 100 mm/Min. nach den in Tabelle 4 angegebenen Zeiten ermittelt.

Scherfestigkeiten in $N/mm^2$

Tabelle 4

| Patent-Beispiel | 15 Min. | 30 Min. | 60 Min. | 240 Min. |
|---|---|---|---|---|
| 24 | 3,1 | 7,0 | 8,2 | 9,6 a) |
| 25 | 3,4 | 7,5 | 8,5 | 10,0 a) |
| 27 | 2,1 | 2,2 | 6,9 | 9,8 a) |
| 28 | 3,0 | 3,3 | 7,0 | 10,2 a) |

Erläuterungen zu Tabelle 4:
a) mit Delaminierung

D. Erfindungsgemäße Polyisocyanat-Zubereitungen auf Basis eines aliphatischen NCO-Prepolymeren (Beispiele 31, 32, 33 und 35), sowie Vergleichsbeispiele (Beispiele 29, 30 und 34)

In den nachfolgenden Beispielen wurde eine 60 %ige Lösung in Ethylglykolacetat/Xylol (4:1) mit einem NCO-Gehalt von 9,5 % (der Lösung) eines aliphatischen NCO-Prepolymeren, hergestellt durch Umsetzung von (i) einem Biuretpolyisocyanat auf Basis von Hexamethylendiisocyanat mit einem NCO-Gehalt von 22 % mit (ii) einem Hydroxylgruppen aufweisenden Polyesterpolyol der OH-Zahl 66 aus Phthalsäureanhydrid und Trimethylolpropan, verwendet.

Die Prepolymerlösung wird in sechs Parallelversuchen (Beispiele 30 - 35) mit jeweils 1,0 % der in Tabelle 5 genannten Zinnverbindungen vermischt, wobei sich diese Mengenangabe einerseits auf das Gewicht der Zinnverbindungen ohne Einbeziehung des Sulfonylisocyanats und andererseits auf den Feststoff der Lösung bezieht. Auf Glasplatten wurden 0,15 mm dicke Naßfilme hergestellt, die bei 29°C und 50 % relativer Luftfeuchtigkeit getrocknet wurden. Anschließend wurde die Pendeldämpfung nach König und die Griffesttrocknung bestimmt (Beispiele 30-35). Beispiel 29 ist ein unkatalysiertes Vergleichsbeispiel. Die Ergebnisse sind in Tabelle 5 zusammengefaßt.

Tabelle 5

| Patent-Beispiel | Verwendeter Katalysator | Pendeldämpfung (s) nach 8 h | 24 h | 3 d | 7 d | Griffesttrocknung |
|---|---|---|---|---|---|---|
| 29 | unkatalysiert | - | - | - | - | >24 h |
| 30 | DBTL | 28 | 123 | 134 | 140 | 330 Min |
| 31 | gemäß Bsp. 2 | 24 | 115 | 123 | 144 | 375 Min |
| 32 | gemäß Bsp. 6 | 27 | 101 | 115 | 143 | 280 Min |
| 33 | gemäß Bsp. 7 | 43 | 143 | 155 | 165 | 290 Min |
| 34 | HBDS | 83 | 119 | 125 | 125 | 110 Min |
| 35 | gemäß Bsp. 5 | 64 | 97 | 104 | 108 | 130 Min |

Beispiel 36

210 g des erfindungsgemäßen geblockten Zinnkatalysators aus Beispiel 2 werden in 790 g TDI 80 gelöst. Es entsteht eine lagerstabile Lösung des Zinnkatalysators im Diisocyanat. Die auf diese Weise gewonnene Lösung zeigt auch nach einer Lagerung über 6 Monate unter Feuchtigkeitsausschluß keine Trübungserscheinungen.

Ein Vergleichsversuch, bei dem nur 0,1 Gew.-Tle. DBTL ohne die erfindungsgemäße Blockierung in TDI 80 gelöst wurde, zeigt schon nach einem Tag Lagerung bei RT kristalline Ausfällungen.

Kaltschaum

Bei der Herstellung von Kaltformschaum werden in Produktionen üblicherweise 2-Komponenten-Systeme (Isocyanat + formuliertes Polyol) verarbeitet. Die Mitverwendung von Zinn-Aktivatoren wie z.B. DBTL bringt den Nachteil mit sich, daß die Polyolformulierung aufgrund mangelnder Lagerstabilität jeweils für den kurzfristigen Verbrauch frisch angesetzt oder eine Zudosierungsmöglichkeit installiert werden muß. Diese Nachteile entfallen bei Ersatz des DBTL durch die erfindungsgemäßen Produkte, da diese im Polyisocyanatgemisch lagerstabil formuliert werden können. Man erhält gegenüber den Nullwerten vergleichbare Schaumqualitäten bei vereinfachter Verfahrenstechnik.

Beispiel einer Kaltschaum-Rezeptur (Laborschaum)

Es werden folgende Ausgangsmaterialien eingesetzt:

Polyether A:

Dispersion eines Umsetzungsprodukts von äquimolaren Mengen an TDI 80 und Hydrazin in einem Polyetherpolyol des Molekulargewichts 4800, hergestellt durch Propoxylierung von Trimethylolpropan und anschließende Ethoxylierung des Propoxylierungsprodukts (PO:EO-Gewichtsverhältnis = 83:17), Feststoffgehalt der Dispersion: 20 %, OH-Zahl der Dispersion: 28.

Polyether B:

Polyetherpolyol des Molekulargewichts 6000, hergestellt durch Propoxylierung von Trimethylolpropan und anschließende Ethoxylierung des Propoxylierungsprodukts (Gewichtsverhältnis PO:EO = 83:17).

Stabilisator:

Handelsüblicher Polysiloxanstabilisator der Bayer AG Leverkusen ("Stabilisator KS 43").

Polyisocyanatgemisch:

Gemisch aus TDI 80 und Roh-MDI im Gewichtsverhältnis 80:20, NCO-Gehalt: 44,5 %.

Die tabellarischen Mengenangaben beziehen sich auf Gewichtsteile.

| | Vergleich | Erf. gem. |
|---|---|---|
| Polyether A | 50 | 50 |
| Polyether B | 50 | 50 |
| Wasser | 3 | 3 |
| Diazabicyclo (2.2.2)octan | 0,2 | 0,2 |
| N-Methylmorpholin | 0,4 | 0,4 |
| Bis-(dimethylaminoethyl)ether | 0,1 | 0,1 |
| Stabilisator | 0,8 | 0,8 |
| DBTL | 0,02 | - |
| Katalysator aus Beisp. 2 | - | 0,042 |
| Polyisocyanatgemisch | 36,7 | 36,3 |
| Startzeit [s] | 5 | 6 |
| Steigzeit [s] | 83 | 95 |
| Abbindezeit [s] | 51 | 56 |

**Patentansprüche**

1. Polyisocyanat-Zubereitungen bestehend aus
a) mindestens einem organischen Polyisocyanat,
b) mindestens einem in der Polyisocyanat-Zubereitung gelöst vorliegendem Umsetzungsprodukt eines Sulfonylisocyanats und eines organischen Zinnkatalysators, sowie gegebenenfalls
c) aus der Polyurethanchemie an sich bekannten Hilfs- und Zusatzmitteln.
dadurch gekennzeichnet, daß es sich bei der Komponente b) um Umsetzungsprodukte von Sulfonylisocyanaten mit, mindestens eine Zinnalkoxy-, Zinnsiloxy-, Distannoxanund/oder Zinncarboxylat-Gruppierung aufweisenden organischen Verbindungen handelt, wobei
(i) das Mengenverhältnis der Reaktionspartner so gewählt wird, daß auf jede Zinn-Sauerstoff-Bindung mindestens eine Isocyanatosulfonylgruppe des Sulfonylisocyanats entfällt;
(ii) die Umsetzung entweder in Abwesenheit der PolyisocyanatKomponente a) unter anschließender Vermischung des Umsetzungsprodukts mit der Polyisocyanatkomponente a) oder in der Polyisocyanatkomponente a) bzw. einer Teilmenge der Polyisocyanatkomponente a) unter anschließender Durchmischung mit der Restmenge erfolgt, wobei in beiden Fällen gegebenenfalls ein Hilfslösungsmittel mitverwendet wird;
(iii) die Umsetzung von Zinnalkoxy- und/oder Zinnsiloxy-Gruppierungen aufweisenden Verbindungen bei Temperaturen unterhalb 100°C,
(iv) die Umsetzung von Distannoxan-Gruppierungen aufweisenden Verbindungen unter Abspaltung von Kohlendioxid bei 20 bis 120°C und
(v) die Umsetzung von Zinncarboxylat-Gruppierungen aufweisenden Verbindungen unter Abspaltung von Kohlendioxid bei oberhalb 80° bis 160°C erfolgt.

2. Polyisocyanat-Zubereitungen gemäß Anspruch 1, dadurch gekennzeichnet, daß sie, bezogen auf das Gewicht der Komponente a), 0,005 bis 10 Gew.–% an in der Komponente b) vorliegendem Zinn aufweisen.

3. Polyisocyanat-Zubereitungen gemäß Anspruch 1 und 2, dadurch gekennzeichnet, daß das Sulfonylisocyanat der Komponente b) eine Verbindung mit mindestens einer aromatisch gebundenen Isocyanatosulfonyl-Gruppe darstellt.

4. Verwendung der Polyisocyanat-Zubereitungen gemäß Anspruch 1 bis 3 als Reaktionspartner für Verbindungen mit gegenüber Isocyanatgruppen reaktionsfähigen Wasserstoffatomen bei der Herstellung von Polyurethankunststoffen.

5. Polyurethankatalysatoren, dadurch gekennzeichnet, daß sie (i) das oberhalb 80° bis 160°C unter Abspaltung von Kohlendioxid erhaltene Umsetzungsprodukt eines Sulfonylisocyanats mit einer, mindestens eine Zinncarboxylat-Gruppierung aufweisenden organischen Verbindung und/oder (ii) das unterhalb 100°C erhaltene Anlagerungsprodukt eines Sulfonylisocyanats an eine, mindestens eine Zinnsiloxy-Gruppierung aufweisende organische Verbindung darstellen, wobei bei der Herstellung des Umsetzungs- bzw. Anlagerungsprodukts jeweils das Mengenverhältnis der Reaktionspartner so gewählt wurde, daß auf jede Zinn- Sauerstoff-Bindung mindestens eine Isocyanatosulfonylgruppe des Sulfonylisocyanats enffällt.

## Claims

1. Polyisocyanate preparations consisting of:
a) at least one organic polyisocyanate,
b) at least tne reaction product of a sulfonyl isocyanate and an organic tin catalyst present in dissolved form in the polyisocyanate preparation and, optionally,
c) auxiliaries and additives known per se from polyurethane chemistry,
characterized in that component b) is selected from reaction products of sulfonyl isocyanates with organic compounds containing at least one tin alkoxy, tin siloxy, distannoxane and/or tin carboxylate group:
(i) the quantitative ratio between the reactants being selected so that, for every tin–oxygen bond, there is at least one isocyanatosulfonyl group of the sulfonyl isocyanate;
(ii) the reaction taking place either in the absence of the polyisocyanate component a) with subsequent mixing of the reaction product with the polyisocyanate component a) or in the polyisocyanate component a) or in part of the polyisocyanate component a) with subsequent mixing with the remainder, an auxiliary solvent optionally being used in both cases;
(iii) the reaction of compounds containing tin alkoxy and/or tin siloxy groups taking place at temperatures below 100°C;
(iv) the reaction of compounds containing distannoxane groups taking place at 20° to 120° C with elimination of carbon dioxide; and
(v) the reaction of compounds containing tin carboxy late groups taking place above 80° to 160°C with elimination of carbon dioxide.

2. Polyisocyanate preparations as claimed in claim 1, characterized in that they contain 0.005 to 10% by weight of tin present in component b), based on the weight of component a).

3. Polyisocyanate preparations as claimed in claims 1 and 2, characterized in that the sulfonyl isocyanate of component b) is a compound containing at least one aromatically bound isocyanatosulfonyl group.

4. The use of the polyisocyanate preparations claimed in claims 1 to 3 as reactants for compounds containing isocyanate–reactive hydrogen atoms in the production of polyurethane plastics.

5. Polyurethane catalysts, characterized in that they contain (i) the reaction product – obtained above 80° to 160°C with elimination of carbon dioxide – of a sulfonyl isocyanate with an organic compound containing at least one tin carboxylate group and/or (ii) the adduct - obtained below 100°C – of a sulfonyl isocyanate with an organic compound containing at least one tin siloxy group, the quantitative ratio between the reactants in the preparation of the reaction product or adduct being selected so that, for every tin–oxygen bond, there is at least one isocyanatosulfonyl group of the sulfonyl isocyanate.

## Revendications

1. Préparations de polyisocyanates constituées
a) d'au moins un polyisocyanate organique,
b) d'au moins un produit réactionnel présent sous forme dissoute dans la préparation de polyisocyanates, d'un isocyanate de sulfonyle et d'un catalyseur organique d'étain, ainsi que éventuellement
c) d'agents d'addition et d'agents auxiliaires connus en soi dans la chimie des polyuréthannes,
caractérisées en ce que, en ce qui concerne le composant b), il s'agit de produits réactionnels d'isocyanates de sulfonyle avec des composés organiques présentant au moins un groupement stannalcoxy, stannosiloxy, distannoxanne et/ou carboxylate d'étain, dans lesquelles
(i) on sélectionne la proportion des partenaires réactionnels de telle sorte, qu'à chaque liaison étain–oxygène, soit attribué au moins un groupe isocyanatosulfonyle de l'isocyanate de sulfonyle;
(ii) la reaction a lieu en l'absence du composant de polyisocyanate a), en procédant au mélange ultérieur du produit réactionnel avec le composant de polyisocyanate a) ou bien dans le composant de polyisocyanate a) ou dans une quantité partielle du composant de polyisocyanate a), en procédant au mélange ultérieur avec la quantité restante, un solvant auxiliaire étant éventuellement utilisé conjointement dans les deux cas ;

(iii) la mise en réaction des composés présentant des groupements stannalcoxy et/ou stannosiloxy a lieu à des températures inférieures à 100°C,
(iv) la mise en réaction de composés présentant des groupements distannoxannes accompagnée d'un dégagement de dioxyds de carbone, a lieu à une température allant de 20° a 120°C, et
(v) la mise en réaction de composés présentant des groupements carboxylate d'étain accompagnée d'un dégagement de dioxyde de carbone, a lieu à une température supérieure à 80°C et allant jusque 160°C.

2. Préparations de polyisocyanates selon la revendication 1, caractérisées en ce qu'elles présentent 0,005 à 10% en poids d'étain présent dans le composant b), rapporté sur le poids du composant a)

3. Préparations de polyisocyanates selon les revendications 1 et 2, caractérisées en ce que l'isocyanate de sulfonyle du composant b) représente un composé contenant au moins un groupe isocyanatosulfonyle lié a un fragment aromatique).

4. Utilisation des préparations de polyisocyanates selon les revendications 1 à 3, comme partenaires réactionnels, pour des composés munis d'atomes d'hydrogène aptes à réagir avec des groupes isocyanate, lors de la préparation de matières synthétiques de polyuréthanne.

5. Catalyseurs de polyurethanne, caractérisés en ce qu'ils représentent (i) le produit réactionnel obtenu avec dégagement de dioxyde de carbone à une température supérieure à 80°C allant jusqu'à 160°C, d'un isocyanate de sulfonyle avec un composé organique présentant au moins un groupement carboxylate d'étain et/ou (ii) le produit d'addition d'un isocyanate de sulfonyle obtenu à une temperature inférieure à 100°C, à un composé organique présentant au moins un groupement stannosiloxy, la proportion des partenaires réactionnels, lors de la préparation du produit réactionnel ou du produit d'addition, étant chaque fois selectionnée de telle sorte qu'à chaque liaison étain–oxygene, soit attribue au moins un groupe isocyanatosulfonyle de l'isocyanate de sulfonyle.